# EUROPÄISCHE PATENTSCHRIFT

(11) **EP 0 433 862 B1**
(45) Veröffentlichungstag und Bekanntmachung des Hinweises auf die Patenterteilung: **05.05.1993**
(21) Anmeldenummer: 90123925.1
(22) Anmeldetag: 12.12.1990
(51) Int. Cl.: B60H 1/22, F23D 11/34, F23C 9/00

(54) **Fahrzeugzusatzheizgerät, insbesondere Kraftfahrzeugzusatzheizgerät**
Auxiliary heater for a vehicle, in particular auxiliary heater for a motor vehicle
Chauffage auxiliaire pour un véhicule, notamment pour véhicule automobile

(30) Priorität: 22.12.1989 DE 3942747
(43) Veröffentlichungstag der Anmeldung: 26.06.1991
(73) Patentinhaber: Firma J. Eberspächer, 73730 Esslingen (DE)
(72) Erfinder: Gaysert, Gerhard, W-7300 Esslingen (DE); Götz, Dieter, W-7312 Kirchheim/Teck (DE)

(56) Entgegenhaltungen:
- EP-A- 0 347 834
- DE-A- 2 604 240
- DE-B- 1 177 271
- FR-A- 2 556 077

## Beschreibung

Gegenstand der Erfindung ist ein Fahrzeug-Heizgerät, aufweisend ein Verbrennungsluftgebläse, einen Brenner für flüssigen Brennstoff, und einen Verbrennungsgas-Heizmedium -Wärmetauscher, wobei der Brenner mit einem Ultraschallzerstäuber für den flüssigen Brennstoff ausgestattet ist, dadurch gekennzeichnet, daß
a) der Strömungsweg zur Zuführung der Verbrennungsluft zu dem Brenner stromab eine den Brennstoffabgabebereich des Ultraschallzerstäubers umgebende Mündung aufweist;
b) der Verbrennungsluft-Strömungsweg derart ausgebildet ist, daß an der Mündung eine drallbehaftete Verbrennungsluftströmung herrscht;
c) vor dem Ultraschallzerstäuber und der Verbrennungsluft-Strömungswegmündung ein Mischrohr angeordnet ist, wobei sich beim Betrieb des Fahrzeug-Heizgeräts die Flammenfront der Verbrennung in der Gegend des stromabseitigen Mischrohrendes befindet;
   und
d) außenseitig des Mischrohrs und ausmündend zwischen der Verbrennungsluft-Strömungswegmündung und dem stromabseitigen Mischrohrende ein Rezirkulationsströmungsweg vorgesehen ist, um Heißgas aus dem Bereich der Verbrennung zu dem Bereich der Brennstoff/Verbrennungsluft-Gemischbildung zurückzuführen.

Das erfindungsgemäße Fahrzeug-Heizgerät ist für Fahrzeuge mannigfacher Art geeignet; als bevorzugte Beispiele seien Personenkraftfahrzeuge, Fahrerkabine und/oder Laderaum von Lastkraftwagen, Omnibusse, Wohnwagen, Wohnmobile, Erdbewegungsmaschinen, Bagger und Segeljachten genannt. Bei den Kraftfahrzeuganwendungen ist das Heizgerät in den meisten Fällen als Ergänzungsheizgerät vorgesehen, das Wärme zu liefern vermag, ohne daß der antreibende Verbrennungsmotor des Kraftfahrzeugs notwendigerweise läuft. Auf diese Weise ist Lieferung von Wärme vor Inbetriebnahme des Verbrennungsmotors möglich (sogenannte Standheizung) oder auch Lieferung zusätzlicher Wärme, wenn das Wärmeangebot seitens des antreibenden Verbrennungsmotors nicht ausreicht. Das Heizgerät kann derart mit dem Antriebs-Verbrennungsmotor gekoppelt sein, daß sich mittels des Heizgeräts eine Vorwärmung des Verbrennungsmotors vor dessen Start bewerkstelligen läßt. Als Heizmedium, das durch die Verbrennungsgase des Heizgeräts erwärmt wird und von dem die Wärme an die zu heizende Umgebung abgegeben wird, kommt insbesondere Wasser bzw. eine als verbrennungsmotorkühlmittelübliche Wasser-Glykol-Mischung oder Luft in Frage.

Fahrzeug-Heizgeräte unterscheiden sich von Heizgeräten wie sie als Einheiten im wesentlichen bestehend aus einem Kessel und einem Brenner zur Wärmeversorgung von Gebäuden weit verbreitet sind, im wesentlichen durch geringere Heizleistung (wobei eine Heizleistung von 15 kW als griffige Heizleistungsobergrenze gelten kann) und durch Auslegung auf kleine Größe, kleines Gewicht, einfachen und störungsunanfälligen Aufbau, sowie geringen Stromverbrauch, weil das Fahrzeug-Heizgerät in den meisten Fällen mit dem Strom aus einem chemischen Speicher (Fahrzeugbatterie) betrieben wird. Außerdem müssen Fahrzeug-Heizgeräte bei einer großen Umgebungstemperaturspanne von etwa -40°C bis +70°C (Motorraum!) betriebsfähig sein und sollen möglichst in beliebiger Lage (horizontal, vertikal, schräg) einbaubar sein.

Fahrzeug-Heizgeräte des in den beiden vorangehenden Absätzen beschriebenen Typs sind grundsätzlich bekannt. Für diese Heizgeräte ist auch bereits ein Ultraschall-Zerstäuber vorgeschlagen worden, um den flüssigen Brennstoff feinverteilt in die Verbrennungsluft einzubringen. Als flüssiger Brennstoff kommen in erster Linie Benzin oder Dieselöl in Betracht, aber auch andere Flüssigtreibstoffe, wie z.B. Kerosin.

Bei Kesseln zur Gebäudebeheizung kennt man bereits Brenner, die als sogenannte Vergasungsbrenner oder Blaubrenner ausgebildet sind. Charakteristisch für derartige Brenner ist das Rezirkulieren eines Teils der durch Verbrennung gebildeten Heißgase zu demjenigen Brennerbereich vor der Brennstoffdüse, wo die Brennstoff-Verbrennungsluft-Gemischbildung stattfindet. Hierdurch wird der Brennstoff über die mittels der Düseneinspritzung erreichbare Feinverteilung hinaus weitestgehend vergast, ehe er die Flammenfront, wo die Verbrennung beginnt, erreicht. Bei derartigen Brennern hat man auch bereits damit gearbeitet, die Verbrennungsluft als Drallströmung zuzuführen (CH-PS 327 648, DE-AS 11 77 271).

Aus der FR-PS 2 556 077 ist ein Fahrzeugheizgerät für eine Leistung von unter 10 kW bekannt, bei dem der Brennstoff mittels eines Ultraschallzerstäubers aufbereitet wird und ein Anteil von 1 % der Verbrennungsluft zur Spülung und Wärmeabfuhr den Zerstäuberteller umströmt, während 99 % der Verbrennungsluft der Brennkammer über Luftdurchtrittsöffnungen in der Brennkammerwand der Brennkammer zugeführt werden. Dabei kann im Bereich der Zündzone die Brennkammer zweischalig durch Einsetzen eines Metalleinsatzes oder Auftrag einer Wärmeisolierschicht ausgebildet sein, um durch eine hohe Brennkammerwandtemperatur eine möglichst verkokungsfreie Verbrennung zu erreichen. Es hat sich jedoch gezeigt, daß die Abstimmung der Verbrennungsluftzufuhr mit 1 % über den Zerstäuberteller und 99 % über die Brennkammerwand schwierig zu realisieren ist und die Verbrennung trotz des Aufwandes nicht optimal erfolgt, insbesondere nicht zuverlässig blaubrennend ist.

Das Grundprinzip der Erfindung läßt sich dahingehend umreiBen, daß für ein Fahrzeug-Heizgerät ein Rezirkulations-Vergasungsbrenner mit drallbehafteter Verbrennungsluftzuführung in Kombination mit einem Ultraschallzerstäuber vorgesehen wird. Hieraus ergibt sich eine neuartige Eigenschafts- und Vorteilskombination:
- eine Hochdruckpumpe (Förderdruck in der Gegend von 10 bar oder darüber) zum Hindurchpressen des Brennstoffs durch eine Düse oder ein Luftkompressor (zur Lieferung von Druckluft mit einem Druck in der Gegend von 1 bar) zur Druckluftzerstäubung von Brennstoff sind entbehrlich; der Ultraschallzerstäuber kommt mit einer Brennstoffzuförderung mit einem Druck aus, der nur geringfügig über dem atmosphärischen Druck liegt. Dennoch wird der von dem Ultraschallzerstäuber abgegebene, träge Brennstoffnebel effektiv in der Verbrennungsluft verteilt und weitestgehend vergast.
- Das für Fahrzeug-Heizgeräte typische, häufige Starten und Stoppen des Brenners (Ein/Ausregelung) kann ohne merkliche Zusatzemission von nachteiligen Abgasbestandteilen, insbesondere CH, NOₓ, CO, Ruß, bewerkstelligt werden.
- Die gerade bei Brennkammern von Fahrzeug-Heizgeräten mit kleiner Heizleistung zu beobachtende Neigung zum Verkoken der Brennkammerwände wird wirksam unterbunden.

Der Ultraschallzerstäuber und die zugeordnete Brennstofförderpumpe haben einen äußerst geringen Strombedarf. Es kommt hinzu, daß Hochspannungsfunkenzündung statt der bisher bei Fahrzeug-Heizgeräten üblichen Glühkerzenzündung eingesetzt werden kann, was weniger störanfällig ist und einen geringeren Stromverbrauch hat.

Bevorzugte Ausgestaltungen der Erfindung sind in den Ansprüchen 2 bis 10 angegeben. Hierzu werden teils anschließend und teils weiter unten bei der Beschreibung eines bevorzugten Ausführungsbeispiels noch detailliertere Ausführungen gemacht.

Die beiden bevorzugtesten Möglichkeiten zur Erzeugung der drallbehafteten Verbrennungsluftströmung an der Mündung des Verbrennungsluft-Strömungswegs sind die Anordnung von Leitschaufeln in einem geeigneten Bereich des Verbrennungsluft-Strömungswegs und die Anordnung von Strömungsöffnungen in einem geeigneten Bereich des Verbrennungsluft-Strömungswegs mit einer derartigen Ausrichtung, daß die gewünschte Drallströmung resultiert. Am günstigsten werden die Leitschaufeln relativ nahe vor der Mündung des Verbrennungsluft-Strömungswegs angeordnet, damit die Verbrennungsluft mit maximalem, gerade erst induziertem Drall aus der Mündung strömt. Es ist aber auch möglich, die Leitschaufeln in Entfernung von der Mündung vorzusehen. Eine bevorzugte Möglichkeit des Vorsehens von Strömungsöffnungen mit spezieller Ausrichtung zur Drallströmungserzeugung besteht darin, im Verbrennungsluft-Strömungsweg vor Erreichung des Mündungsendes einen im wesentlichen zylindrischen Strömungs-Ringraum zu haben, wobei die Verbrennungsluft im Ringraum mit Tangentialkomponente bzw. Umfangskomponente zuströmt und in dem Ringraum sowohl in Umfangsrichtung als auch mit Axialkomponente hin zu der Mündung strömt.

Eine besonders bevorzugte Möglichkeit zur Schaffung des Rezirkulations-Strömungswegs außenseitig des Mischrohrs besteht darin, das Mischrohr mittels geeigneter Halter derart in einem umgebenden Bauteil zu haltern, daß sich zwischen diesem Bauteil und der Außenseite des Mischrohrs ein axial durchströmbarer Rezirkulations-Strömungsweg ergibt. Alternativ können mehrere, umfangsmäßig verteilte, axial verlaufende Rezirkulations-Strömungskanäle vorgesehen sein. Mit diesen Ausbildungen erhält man zusätzlich den Effekt, daß das Heizrohr von außen her durch rezirkuliertes Heißgas aufgeheizt wird, was das Verdampfen von Brennstoff in dem Heizrohr weiter fördert. Das das Mischrohr umgebende Bauteil kann ein Flammrohr sein, das in seiner axialen Fortsetzung den Bereich stromab vom Ende des Heizrohres umgibt. Das Flammrohr kann aber auch erst etwa in demjenigen Bereich beginnen, wo das Heizrohr endet.

Zur Zuströmung des rezirkulierten Heißgases in das Mischrohr gibt es eine ganze Reihe von Möglichkeiten. Eine besonders einfache und bevorzugte Möglichkeit besteht darin; daß das Mischrohr stromaufseitig im Abstand von der Verbrennungsluft-Strömungswegmündung endet, so daß dort das rezirkulierte Heißgas zu der Verbrennungsluft mit dem darin verteilten Brennstoffnebel zuströmen kann. Eine weitere bevorzugte Möglichkeit besteht darin, das Mischrohr stromaufseitig bis zu der Endwand, in der sich die Mündung befindet, durchzuführen und durch geeignete Öffnungen, Schlitze oder dergleichen in dem Mischrohr dafür zu sorgen, daß hierdurch das rezirkulierte Heißgas in das Mischrohr strömen kann. Das Mischrohr hat vorzugsweise einen größeren Durchmesser bzw. eine größere Querschnittsfläche als die Verbrennungsluft-Strömungswegmündung, damit sich die Verbrennungsluftströmung hinter der Mündung, üblicherweise unter Verlangsamung der Strömungsgeschwindigkeit, in das Mischrohr ausbreiten kann. Die Rezirkulation von Heißgas basiert auf einem Injektoreffekt. Die aus der Mündung austretende Verbrennungsluftströmung hat eine vergleichsweise hohe Strömungsgeschwindigkeit, so daß dort ein niedrigerer statischer Druck herrscht. Durch diesen Unterdruck wird Heißgas durch den Rezirkulations-Strömungsweg angesaugt.

Eine besonders geeignete Pumpe für die Förderung des Brennstoffs zu dem Ultraschallzerstäuber ist eine elektromagnetisch angetriebene Kolbenpumpe. Diese liefert bei geringem Energieverbrauch genügend Druck, um die Leitungswiderstände zwischen der Pumpe und dem Ultraschallzerstäuber zu überwinden. Die Lieferung eines wesentlich darüber hinausgehenden Überdrucks ist nicht erforderlich, da der Ultraschallzerstäuber nicht auf dem Einspritzdüsenprinzip beruht. Elektromagnetisch angetriebene Kolbenpumpen, auch kurz "Magnetkolbenpumpen" genannt, sind an sich bekannt und auf dem Markt erhältlich. Es ist günstig, zwischen der Kolbenpumpe und dem Ultraschallzerstäuber eine Einrichtung zum Dämpfen von Brennstoffpulsationen vorzusehen. Diese Einrichtung kann ein dämpfendes Gaspolster und/oder eine Strömungsdrossel aufweisen, letztere beispielsweise in Gestalt einer Brennstoffleitung bzw. eines Brennstoffleitungsabschnitts mit gezielt relativ engem Innenquerschnitt.

Die Erfindung und Ausgestaltungen der Erfindung werden nachfolgend anhand eines zeichnerisch dargestellten, bevorzugten Ausführungsbeispiels noch näher erläutert. Es zeigt:
- Figur 1: schematisiert ein Fahrzeug-Heizgerät im Längsschnitt zur Veranschaulichung der Anordnung der grundlegenden Bauteile;
- Figur 2: den Brennkammerbereich des Heizgeräts von Fig. 1 im Längsschnitt gemäß B-B in Figur 3;
- Figur 3: den Brennkammerbereich von Fig. 2 im Querschnitt längs A-A in Fig. 2.

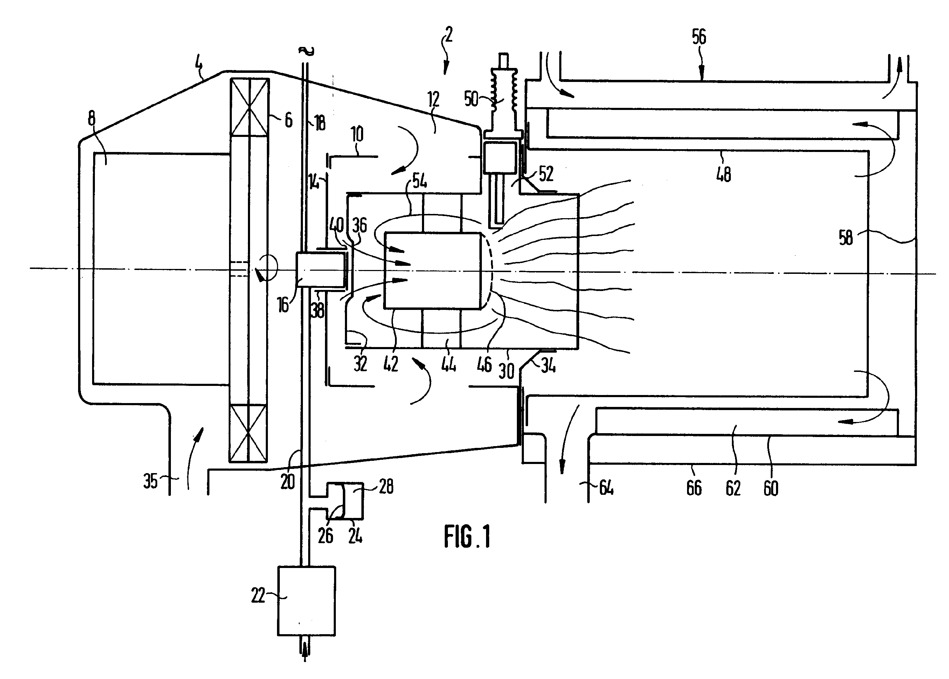

Bei dem in Fig. 1 dargestellten Fahrzeug-Heizgerät 2 ist in einem Gehäuse 4 ein Verbrennungsluftgebläse 6 (hier in Form eines Seitenkanalgebläses) mit zugeordnetem Antriebs-Elektromotor 8 angeordnet. Im in Fig. 1 rechten Bereich geht das Gehäuse 4 in eine im wesentlichen zylindrische Wand 10 über, die sich vom rechten Ende aus für etwa 1/3 der Gehäuselänge nach links in das Gehäuseinnere erstreckt. Die Wand 10 hat sich axial erstreckende, schlitzförmige, weiter unten noch genauer zu beschreibende Öffnungen 12. Am in Fig. 1 linken Ende der Wand 10 ist eine Endwand 14 befestigt.

Zentral in der Endwand 14 ist ein Ultraschallzerstäuber 16 angebracht. Man erkennt eine Stromzuführung 18 und eine Brennstoffzuführungsleitung 20 zu dem Ultraschallzerstäuber 16. Ferner erkennt man eine Magnetkolbenpumpe 22 zur Förderung von Brennstoff durch die Leitung 20 sowie einen seitlich an die Leitung 20 angesetzten Gaspolsterdämpfer 24 mit elastischer Trennwand 26 zwischen dem Brennstoff und dem Gaspolster 28.

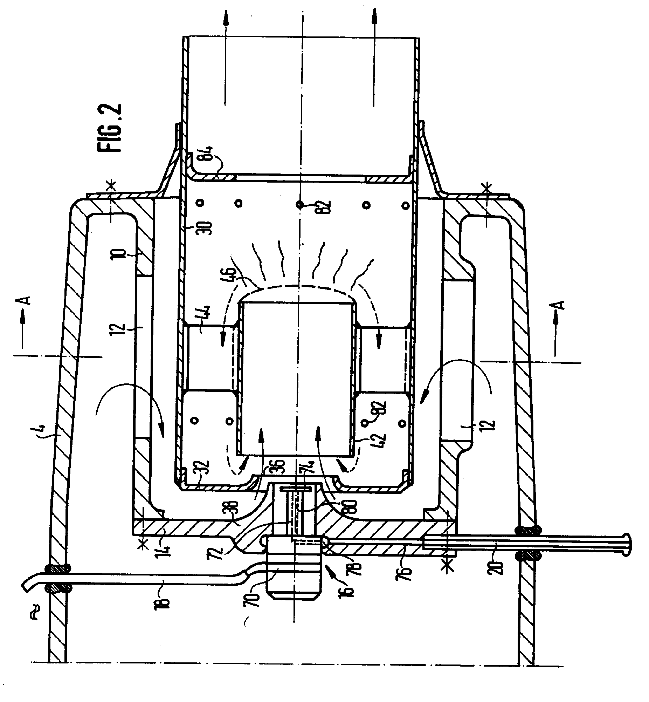

Innerhalb der beschriebenen, im wesentlichen zylindrischen Wand 10 ist konzentrisch ein kreisrundes Flammrohr 30 mittels eines ringförmigen Halters 34 befestigt. Das Flammrohr 30 ragt ein Stück nach rechts über das Ende des Gehäuses 4 hinaus. Am linken Ende ist das Flammrohr 30 mit einer Endwand 32 versehen, die zentral eine Öffnung aufweist, wobei der Öffnungsrand nach rechts weisend strömungsgünstig abgebogen ist. Die Öffnung liegt in einer Ebene, die sich geringfügig rechts von dem Zerstäuberteller (vergleiche Fig. 2) des Ultraschallzerstäubers 16 befindet. Die durch den Stutzen 35 des Gehäuses 4 angesaugte und mittels des Gebläses 6 geförderte Verbrennungsluft tritt durch die Öffnungen 12 in den Ringraum zwischen der Wand 10 und dem Flammrohr 30 ein, und zwar infolge der weiter unten zu beschreibenden Ausbildung der Öffnungen 12 in einer Drallströmung, die im wesentlichen spiralförmig um das Flammrohr 30 herum und entlang des Flammrohrs 30 axial nach links strömt. Diese Verbrennungsluftströmung strömt weiter durch den Bereich zwischen der Endwand 14 und der Flammrohr-Endwand 32 und tritt dann als drallbehaftete Strömung aus der beschriebenen Öffnung der Flammrohr-Endwand 32 nach rechts aus. Die Öffnung in der Flammrohr-Endwand 32 stellt somit die Mündung 36 des Verbrennungsluft-Strömungswegs in die Brennkammer des Fahrzeug-Heizgeräts 2 dar. Zwischen dem Außenumfang eines Stutzens 38 der Endwand 14, in dem der Ultraschallzerstäuber 16 befestigt ist, und dem Mündungsrand ist ein Ringspalt ausgebildet, der als Ringdüse 40 der Verbrennungsluftzuführung wirkt.

Im wesentlichen konzentrisch innerhalb des Flammrohrs 30 ist ein kreisrundes Mischrohr 42 mittels radialer Halterungsbleche 44 gehaltert. Das Mischrohr 42 nimmt etwa 20 bis 50 % der Länge des Flammrohrs 30 ein und beginnt stromaufseitig mit einem Abstand von einigen Millimetern hinter der Mündung 36. Der Durchmesser des Mischrohrs 42 ist 10 bis 30% größer als der Durchmesser der Mündung 36. Die Strömungsquerschnittsverhältnisse und die Verbrennungsluft-Strömungsgeschwindigkeit sind so gewählt, daß sich anschließend an das stromabseitige Ende des Mischrohrs 42 eine Flammenfront 46 ausbildet. Die Verbrennung des Brennstoffs findet im rechten Bereich des Flammrohrs 30 und anschließend in einem weiter unten zu beschreibenden Heizrohr 48 statt. In das Gehäuse 4 ist eine Zündkerze 50 eingeschraubt, derart, daß sie durch eine Öffnung 52 des Flammrohrs 30 ragt und daß ihr Ende mit den Elektroden im Bereich kurz hinter dem stromabseitigen Ende des Mischrohrs 42 ist. Mittels der Hochspannungs-Zündkerze 50 kann das aus dem Mischrohr 42 austretende Gemisch aus Verbrennungsluft und vergastem Brennstoff beim starten des Heizgeräts 2 gezündet werden.

Der Raum zwischen dem Außenumfang des Mischrohrs 42 und dem Innenumfang des Flammrohrs 30 dient als Rezirkulations-Strömungsweg 54 für Heißgas zurück zum Eintritt des Mischrohrs 42.

Am rechten Stirnende des Gehäuses 4 sind das bereits angesprochene Heizrohr 48 und ein doppelwandiger Wärmetauscher 56 koaxial miteinander und zu dem Flammrohr 30 befestigt. Das Heizrohr 48 ist zylindrisch, und der zylindrische Wärmetauscher 56 umgibt das Heizrohr 48 koaxial. Das Heizrohr 48 endet rechts ein Stück vor einer Endwand 58 des Wärmetauschers 56. Die durch Verbrennung erzeugten Heißgase biegen am Ende des Heizrohrs 48 um 180° nach außen-rückwärts um und strömen die Innenwand 60 des Wärmetauschers, die mit radial nach innen ragenden Rippen 62 versehen ist, entlang, bis sie den Wärmetauscher 56 durch einen Abgasstutzen 64 verlassen. Zwischen der Innenwand 60 und einer Außenwand 66 des Wärmetauschers 56 strömt als Heizmedium eine Kühlmittelflüssigkeit, die beispielsweise mit der Kühlmittelflüssigkeit des Antriebs-Verbrennungsmotors des Kraftfahrzeugs, bei dem das Heizgerät 2 eingebaut ist, identisch ist. Der vom Heizmedium durchströmte Ringraum des Wärmetauschers 56 ist in geeigneter Weise an den Kühlmittelkreislauf, der auch die Fahrzeugheizung mit Wärme versorgt, des Fahrzeugs angeschlossen.

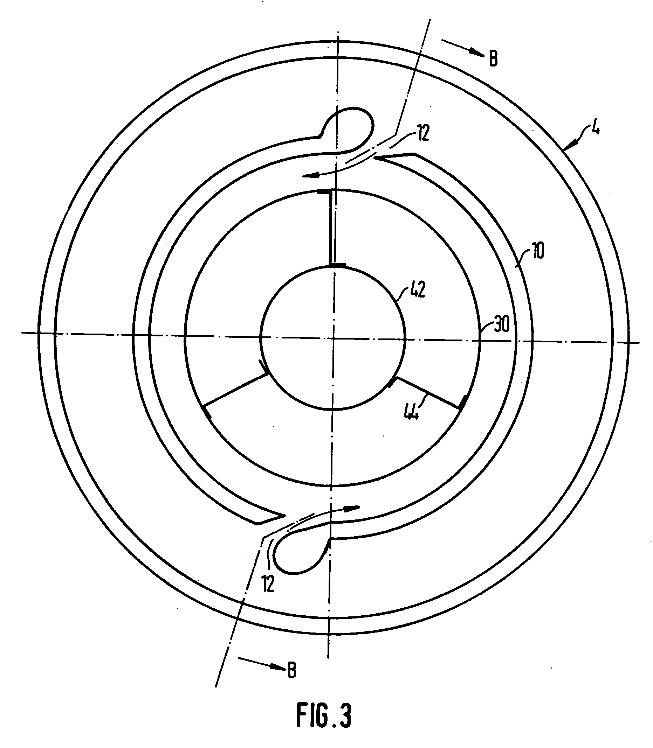

Anhand der Figuren 2 und 3 werden jetzt noch weitere Einzelheiten des Fahrzeug-Heizgeräts erläutert:

In Fig. 2 erkennt man genauer, daß der Ultraschallzerstäuber 16 einen Ultraschallschwinger 70, einen nach rechts vorragenden Stab 72 (das sogenannte Horn) und am Ende des Stabs 72 einen Zerstäuberteller 74 aufweist. Der Brennstoff wird dem Zerstäuberteller 74 durch die Brennstoffleitung 20, einen radialen Kanal 76 in der Endwand 14, eine Umfangsnut 80 in der Endwand 14, und einen durch das Horn 72 führenden Innenkanal 80 zugeführt. Der Stutzen 38, in dem das Horn 72 und der Zerstäuberteller 74 mit Spiel angeordnet sind, erhebt sich - nach rechts in Fig. 2 - mit einem ringsum strömungsgünstig gerundeten Übergang von der Ebene der Endwand 14. Die Endwand 32 des Flammrohrs 30 ist in der Nähe ihrer zentralen Öffnung im wesentlichen parallel strömungsgünstig gerundet, so daß zwischen dem rechten axialen Endbereich des Stutzens 38 und dem zentralen Bereich der Endwand 32 die ringdüsenartige Mündung 36 gebildet ist. Diese umgibt den Bereich stromab des Zerstäubertellers 74, wo der Brennstoffnebel abgegeben wird, koaxial.

Besonders deutlich in Fig. 3 erkennt man, daß die Verbrennungsluft dem Ringraum zwischen der Wand 10 des Gehäuses 4 über zwei sich axial erstreckende, schlitzförmige Zuströmöffnungen 12 zuströmt, die einander im wesentlichen diametral gegenüberliegen. Die Zutrömöffnungen 12 sind gegenüber einer Radialebene schräggestellt und mit einem ersten, verdickten Rand und einem zweiten, zugespitzen Rand so geformt, daß sich in dem Ringraum zwischen der Wand 10 und dem Flammrohr 30 eine Strömung ausbildet, die im wesentlichen spiralförmig in Umfangsrichtung des Ringraums und axial zu der Mündung 36 hin strömt.

Es wird darauf hingewiesen, daß statt der gezeichneten Art der Erzeugung einer Drallströmung der Verbrennungsluft in der Mündung 36 insbesondere die Möglichkeit besteht, relativ nahe an der Mündung 36 geeignete Leitschaufeln zur Erzeugung einer Drallströmung anzuordnen. In diesem Fall muß kein Strömungsringraum für Verbrennungsluft am Außenumfang des Flammrohrs 30 vorgesehen sein.

Zur Veranschaulichung ist in Fig. 2 die Strömung der Verbrennungsluft mit durchgehenden Pfeilen angedeutet, während die weiter vorne schon beschriebene Rezirkulationsströmung von Heißgas zwischen dem Flammrohr 30 und dem Mischrohr 42 mit unterbrochenen Pfeilen angedeutet ist. Der Zerstäuberteller 74 liegt knapp links von dem Ende des Stutzens 38. Der Stutzen 38 endet knapp links von dem Öffnungsrand der Endwand 32.

Die Magnetkolbenpumpe 22 und der Ultraschallzerstäuber 16 benötigen nur geringe elektrische Leistung. Der von dem Zerstäuberteller 74 abgegebene, relativ träge Brennstoffnebel wird durch die drallbehaftete Verbrennungsluftströmung in der Mündung 36 zerrissen und in das Mischrohr 42 getragen. Im Zusammenwirken mit dem rezirkulierten Heißgas erfolgt dort eine intensive und praktisch vollständige Vergasung des Brennstoffs. Insbesondere größere Brennstofftröpfchen werden von innen gegen die Wand des Mischrohrs 42 geschleudert, woraufhin auch dieser Brennstoffanteil wirksam vergast wird. Das Mischrohr 42 wird durch das außen entlangströmende, rezirkulierte Heißgas erhitzt, was die Vergasung weiter fördert. Durch die Erfindung können auch kleine Brennstoffmengen pro Zeiteinheit, wie sie für Fahrzeug-Heizgeräte typisch sind, gut vergast werden. Mit dem Heizgerät lassen sich kurze Regelzyklen bzw. Starten und Stoppen in kurzen Zeitintervallen gut bewältigen, ohne daß es hierbei zu erhöhten Schadstoffemissionen kommt.

In Fig. 2 sind noch zusätzliche Ausbildungsdetails eingezeichnet, die vorzugsweise vorhanden sind, aber nicht vorhanden sein müssen. Das Flammrohr 30 weist eine erste Reihe von Zuströmöffnungen 82 in demjenigen Bereich, wo das Mischrohr 42 ist, sowie eine zweite Reihe von Zuströmöffnungen 82 ein Stück stromab des stromabseitigen Endes des Mischrohrs 42 auf. Durch diese Zuströmöffnungen 82 kann Sekundärluft aus dem Ringraum zwischen der Wand 10 und dem Flammrohr 30 in das Innere des Flammrohrs 30 zuströmen. Die jeweilige Zuströmöffnungsreihe erstreckt sich entlang des Umfangs des Flammrohrs 30. Statt der gezeichneten runden Zuströmöffnungen 82 können auch schlitzförmige Zuströmöffnungen vorgesehen sein, die vorzugsweise relativ zur Axialrichtung schräggestellt sind. Außerdem erkennt man eine Flammenblende 84, die etwa in der Mitte zwischen dem stromabseitigen Ende des Mischrohrs 42 und dem stromabseitigen Ende des Flammrohrs 30 angeordnet ist.

## Patentansprüche

1. Fahrzeug-Heizgerät (2), aufweisend ein Verbrennungsluftgebläse (6), einen Brenner für flüssigen Brennstoff, und einen Verbrennungsgas-Heizmedium-Wärmetauscher (56), wobei der Brenner mit einem Ultraschallzerstäuber (16) für den flüssigen Brennstoff ausgestattet ist, dadurch gekennzeichnet, daß
a) der Strömungsweg zur Zuführung der Verbrennungsluft zu dem Brenner stromab eine den Brennstoffabgabebereich (74) des Ultraschallzerstäubers (16) umgebende Mündung (36) aufweist;
b) der Verbrennungsluft-Strömungsweg derart ausgebildet ist, daß an der Mündung (36) eine drallbehaftete Verbrennungsluftströmung herrscht;
c) vor dem Ultraschallzerstäuber (16) und der Verbrennungsluft-Strömungswegmündung (36) ein Mischrohr (42) angeordnet ist, wobei sich beim Betrieb des Fahrzeug-Heizgeräts (2) die Flammenfront (46) der Verbrennung in der Gegend des stromabseitigen Mischrohrendes befindet;
und
d) außenseitig des Mischrohrs (42) und ausmündend zwischen der Verbrennungsluft-Strömungswegmündung (36) und dem stromabseitigen Mischrohrende ein Rezirkulationsströmungsweg (54) vorgesehen ist, um Heißgas aus dem Bereich der Verbrennung zu dem Bereich der Brennstoff/Verbrennungsluft-Gemischbildung zurückzuführen.

2. Fahrzeug-Heizgerät nach Anspruch 1,
dadurch gekennzeichnet,
daß die Verbrennungsluft-Strömungswegmündung (36) als zu dem Ultraschallzerstäuber (16) im wesentlichen konzentrische Ringdüse ausgebildet ist.

3. Fahrzeug-Heizgerät nach Anspruch 1 oder 2,
dadurch gekennzeichnet,
daß im Verbrennungsluft-Strömungsweg, vorzugsweise nahe der Mündung (36), Leitschaufeln zur Erzeugung der drallbehafteten Verbrennungsluftströmung vorgesehen sind.

4. Fahrzeug-Heizgerät nach Anspruch 1 oder 2,
dadurch gekennzeichnet,
daß der Verbrennungsluft-Strömungsweg einen im wesentlichen zylindrischen Ringraum aufweist, daß der Ringraum Zuströmöffnungen (12) mit Tangentialkomponente zur Erzeugung einer Verbrennungsluftströmung mit Umfangskomponente hat, und daß der Ringraum in die Mündung (36) übergeht.

5. Fahrzeug-Heizgerät nach einem der Ansprüche 1 bis 4,
dadurch gekennzeichnet,
daß das Mischrohr (42), vorzugsweise im wesentlichen konzentrisch, in einem Flammrohr (30) gehaltert ist, an das sich stromab der Verbrennungsgas/Heizmedium-Wärmetauscher (56) anschließt, und daß der Raum zwischen dem Mischrohr (42) und dem Flammrohr (30) als Rezirkulations-Strömungsweg (54) dient.

6. Fahrzeug-Heizgerät nach einem der Ansprüche 1 bis 5,
dadurch gekennzeichnet,
daß das Mischrohr (42) stromaufseitig im Abstand von der Verbrennungsluft-Strömungswegmündung (36) endet, so daß dort das zurückgeführte Heißgas zu der Verbrennungsluft zuströmen kann.

7. Fahrzeug-Heizgerät nach Anspruch 5 oder 6,
dadurch gekennzeichnet,
daß das Flammrohr (30) in dem Bereich des Rezirkulations-Strömungswegs (54) und/oder stromab des stromabseitigen Mischrohrendes Zuströmöffnungen (82) für Sekundär-Verbrennungsluft aufweist.

8. Fahrzeug-Heizgerät nach einem der Ansprüche 5 bis 7,
dadurch gekennzeichnet,
daß das Flammrohr (30) stromaufseitig eine Endwand (32) aufweist und daß die Verbrennungsluft-Strömungswegmündung (36) in der Endwand (32) vorgesehen ist.

9. Fahrzeug-Heizgerät nach einem der Ansprüche 1 bis 8,
dadurch gekennzeichnet,
daß eine elektromagnetisch angetriebene Kolbenpumpe (22) für die Förderung des Brennstoffs zu dem Ultraschallzerstäuber (16) vorgesehen ist.

10. Fahrzeug-Heizgerät nach Anspruc 9,
dadurch gekennzeichnet,
daß zwischen der Kolbenpumpe (22) und dem Ultraschallzerstäuber (16) eine Einrichtung (20, 24) zum Dämpfen von Brennstoffpulsation vorgesehen ist.

## Claims

1. Vehicle heater (2), having a combustion air blower (6), a burner for liquid fuel, and a combustion gas heating medium heat exchanger (56), the burner being equipped with an ultrasound atomizer (16) for the liquid fuel, characterized in that
a) the flow path for supplying the combustion air to the bumer downstream has an orifice (36) which surrounds the fuel discharging region (74) of the ultrasound atomizer (16);
b) the combustion air flow path is constructed such that a swirling combustion air flow prevails at the orifice (36);
c) there is arranged upstream of the ultrasound atomizer (16) and the combustion air flow path orifice (36) a mixing tube (42), the flame front (46) of combustion being located, during operation of the vehicle heater (2), in the region of the downstream end of the mixing tube; and
d) there is provided on the outside of the mixing tube (42) and opening out between the combustion air flow path orifice (36) and the downstream end of the mixing tube a recirculation flow path (54) in order to return hot gas from the region of combustion to the region for the formation of the fuel/combustion air mixture.

2. Vehicle heater according to Claim 1, characterized in that the combustion air flow path orifice (36) is constructed as an annular nozzle which is substantially concentric with respect to the ultrasound atomizer (16).

3. Vehicle heater according to Claim 1 or 2, characterized in that there are provided in the combustion air flow path, preferably in the vicinity of the orifice (36), guide vanes for generating the swirling combustion air flow.

4. Vehicle heater according to Claim 1 or 2, characterized in that the combustion air flow path has a substantially cylindrical annular space, in that the annular space has inflow openings (12) with a tangential component for generating a combustion air flow with a peripheral component, and in that the annular space merges into the orifice (36).

5. Vehicle heater according to one of Claims 1 to 4, characterized in that the mixing tube (42) is mounted, preferably substantially concentrically, in a flame tube (30) to which the combustion gas/heating medium heat exchanger ( 56 ) is connected downstream, and in that the space between the mixing tube (42) and the flame tube ( 30 ) serves as a recirculation flow path ( 54 ).

6. Vehicle heater according to one of Claims 1 to 5, characterized in that the mixing tube ( 42 ) ends upstream at a spacing from the combustion air flow path orifice ( 36 ), so that the returned hot gas can there flow into the combustion air.

7. Vehicle heater according to Claim 5 or 6, characterized in that the flame tube (30) has inflow openings (82) for secondary combustion air in the region of the recirculation flow path (54) and/or downstream of the downstream end of the mixing tube.

8. Vehicle heater according to one of Claims 5 to 7, characterized in that the flame tube (30) has an end wall (32) upstream, and in that the combustion air flow path orifice (36) is provided in the end wall (32).

9. Vehicle heater according to one of Claims 1 to 8, characterized in that an electromagnetically driven piston pump (22) is provided for conveying fuel to the ultrasound atomizer (16).

10. Vehicle heater according to Claim 9, characterized in that there is provided between the piston pump (22) and the ultrasound atomizer (16) a means (20, 24) for damping fuel pulsation.

## Revendications

1. Appareil de chauffage pour véhicule (2) présentant une soufflante pour l'air de combustion (6) un brûleur pour combustible liquide et un échangeur de chaleur pour agent caloporteur à gaz de combustion (56), le brûleur étant équipé d'un diffuseur d'ultrasons (16) pour le combustible liquide, caractérisé en ce que
a) le trajet du courant d'air de combustion alimentant le brûleur présente, en aval, une bouche (36) entourant la zone d'arrivée du combustible (74) du diffuseur d'ultrasons (16);
b) le trajet du courant d'air de combustion est réalisé de telle manière, qu'un courant d'air de combustion tourbillonnant règne au niveau de la bouche (36);
c) un tube mélangeur (42) est disposé devant le diffuseur d'ultrasons (16) et la bouche (36) du trajet du courant d'air de combustion, le font de flammes (46) de la combustion se trouvant, lors du fonctionnement de l'appareil de chauffage pour véhicule (2), à proximité de l'extrémité du tube mélangeur située en aval;
et en ce que
d) à l'extérieur du tube mèlangeur (42), et sortant entre la bouche (36) du trajet du courant d'air de combustion et l'extrémité du tube mélangeur située en aval, est prévu un trajet du courant de recirculation (54) pour ramener le gaz chaud de la zone de combustion à la zone où est réalisé le mélange de combustible et d'air de combustion.

2. Appareil de chauffage pour véhicule selon la revendication 1, caractérisé en ce que la bouche (36) du trajet du courant d'air de combustion est réalisée, par rapport au diffuseur d'ultrasons (16), sous forme de gicleur annulaire essentiellement concentrique.

3. Appareil de chauffage pour véhicule selon la revendication 1 ou 2, caractérisé en ce que des pales directrices pour produire le courant d'air de combustion tourbillonnant sont prévues sur le trajet du courant d'air de combustion, de préférence à proximité de la bouche (36).

4. Appareil de chauffage pour véhicule selon la revendication 1 ou 2, caractérisé en ce que le trajet du courant d'air de combustion présente und chambre annulaire essentiellement cylindrique, en ce que la chambre annulaire comporte des ouvertures d'arrivée (12) avec une composante tangentielle pour produire un courant d'air de combustion avec une composante périphérique, et en ce que la chambre annulaire devient la bouche (36).

5. Appareil de chauffage selon l'une des revendications 1 à 4, caractérisé en ce que le tube mélangeur (42), de préférence essentiellement concentrique, est fixé dans un tube-foyer (30) auquel est raccordé en aval l'échangeur de chaleur (56) pour agent caloporteur à gaz de combustion, et en ce que l'espace entre le tube mélangeur (42) et le tube-foyer (30) sert de trajet pour le courant de recirculation (54).

6. Appareil de chauffage pour véhicule selon l'une des revendications 1 à 5, caractérisé en ce que le tube mélangeur (42) se termine en amont, à une certaine distance de la bouche (36) du trajet du courant d'air de combustion, si bien qu'à cet endroit, le gaz chaud ramené peut affluer vers l'air de combustion.

7. Appareil de chauffage pour véhicule selon la revendication 5 ou 6, caractérisé en ce que le tube-foyer (30) présente, dans la zone du trajet du courant de recirculation (54) et/ou en aval de l'extrémité du tube mélangeur située en aval, des orifices d'arrivée (82) pour l'air de combustion secondaire.

8. Appareil de chauffage pour véhicule selon l'une des revendications 5 à 7, caractérisé en ce que le tube-foyer (30) présente, en amont, une paroi terminale (32) et en ce que la bouche (36) du trajet du courant d'air de combustion est prévue dans la paroi terminale (32).

9. Appareil de chauffage pour véhicule selon l'une des revendications 1 à 8, caractérisé en ce qu'une pompe à piston (22) entraînée de manière électromagnétique est prévue pour acheminer le combustible au diffuseur d'ultrasons (16).

10. Appareil de chauffage pour véhicule selon la revendication 9, caractérisé en ce qu'un dispositif (20, 24) est prévu entre la pompe à piston (22) et le diffuseur d'ultrasons (16) pour vaporiser les pulsations de combustible.
